# NEUE EUROPÄISCHE PATENTSCHRIFT

(11) **EP 1 510 787 B2**
(45) Veröffentlichungstag und Bekanntmachung des Hinweises auf die Entscheidung über den Einspruch: **14.11.2012**
(45) Hinweis auf die Patenterteilung: 05.03.2008
(21) Anmeldenummer: 04020036.2
(22) Anmeldetag: 24.08.2004
(51) Int. Cl.: G01D 5/16

(54) **Verfahren und Winkelgeber zur Messung der absoluten Winkelposition**
Method and rotary encoder for measuring the absolute angular position
Procédé et capteur angulaire de mesure de la position angulaire absolue

(30) Priorität: 28.08.2003 DE 10340065
(43) Veröffentlichungstag der Anmeldung: 02.03.2005
(73) Patentinhaber: Lenord, Bauer & Co. GmbH, 46145 Oberhausen (DE)
(72) Erfinder: Stritzke, Burkhard, 45896 Gelsenkirchen (DE); Danowski, Marcus, 45966 Gladbeck (DE)
(74) Vertreter: Demski, Siegfried

(56) Entgegenhaltungen:
- WO-A1-01//42753
- DE-A1- 10 038 296
- DE-A1- 10 041 089
- DE-A1- 10 041 096
- DE-A1- 10 044 741
- DE-A1- 10 044 741
- DE-A1- 19 507 304
- DE-A1- 19 630 108
- DE-A1- 19 630 108
- DE-A1- 19 909 890
- DE-C2- 19 850 677
- US-B1- 6 169 396
- US-B1- 6 384 752

## Beschreibung

Die Erfindung betrifft ein Verfahren zur Erfassung einer absoluten Winkelposition eines rotierbaren Bauteils, insbesondere einer Welle, bei dem in einer ersten ortsfesten Einheit, welche eine Auswerteelektronik aufweist, mindestens zwei unabhängige magneto-resistive Sensorpaare durch mindestens eine Magnetfeldquelle vormagnetisiert werden, wobei die Sensorpaare in unmittelbarer Nähe der Magnetfeldquelle angeordnet sind und wobei in einer zweiten mit dem Bauteil rotierbaren Einheit mindestens ein Modulator, der stellungsabhängig den magnetischen Fluss der Magnetfeldquelle am Ort der Sensorpaare in Dichte und/oder Richtung verändert, infolge seiner Rotation mit dem Bauteil die Sensoren periodisch überdeckt und deren Erregung beeinflusst, wobei die Sensoren je eines Sensorpaars so angeordnet sind, dass sie durch die Überdeckungselemente des Modulators mit einem Winkelunterschied von einer viertel Überdeckungsperiode überdeckt werden, sowie einen Winkelgeber zur Durchführung des Verfahrens.

Antriebe für rotierende Maschinenbauteile, speziell Wellenantriebe, mit hochdynamischem Regelverhalten benötigen zur Drehzahlmessung die Zustandsgrößen "Rotorlage" und "Drehzahl". Die Anzahl der zur Regelung benötigten Datenpunkte ist um so höher, je höher das dynamische Verhalten oder je langsamer die Umdrehungszahl des rotierenden Bauteils beziehungsweise der Welle ist. Mit dem Aufkommen hochpräziser Technologien, die immer höhere Anforderungen an den Gleichlauf von Wellen stellen, wächst ein Bedarf an immer präziseren Wellenantriebsteuerungen. Die Präzision der Steuerung ist dabei abhängig von der Auflösung der Winkelgeber und der Geschwindigkeitsmesser, die das Eingangssignal für die Antriebsregelung zur Verfügung stellen.

Zur Messung von Bauteilwinkel- beziehungsweise Wellenlage wurden in der Vergangenheit viele verschiedene Technologien entwickelt, diese mit immer höherer Präzision zu bestimmen, dabei besteht eine strenge Korrelation zwischen Präzision der Winkelaufnahme und der Präzision der daraus zur Messung bestimmten Winkelinformation.

Um die Präzision des zu messenden absoluten Winkels eines rotierenden Bauteils zu erhöhen, ist es notwendig, eine Information, aus der die absolute Winkelposition ermittelt werden kann, auf dem rotierenden Bauteil entsprechend weiter zu verdichten. Der Verdichtung diskreter maschinenlesbarer Winkelinformation ist aber eine Grenze durch die Umgebungsbedingungen gesetzt, in der die Winkelinformation zur Verfügung stehen muss, wie beispielsweise Eintrag von betriebsbedingten Flugstäuben in das Modulator-Sensorgehäuse. Zwar lässt die Dichte, mit der zur Zeit diskrete und unabhängige Winkelinformationen auf rotierende Bauteile aufgebracht werden können, genügend Spielraum für noch präzisere absolute Winkelgeber als im Stand der Technik, jedoch werden die Bauteile, welche die Winkelinformation tragen, beziehungsweise das Ableseverfahren dabei immer empfindlicher, was einer Forderung nach höherer Robustheit entgegensteht. Deshalb ist es notwendig, Verfahren zu entwickeln, die es erlauben, Winkel immer präziser aufnehmen zu können, wobei die Robustheit und Verlässlichkeit der dabei verwendeten Komponenten ebenfalls zunehmen soll.

Beispiel für robuste und hoch präzise Winkelgeber werden in dem US-Patent 4,039,936 und der DE 19816696 A1 beschrieben. Charakteristisch für diese als nächster Stand der Technik anzusehenden Technologien ist es, einen magneto-resistiven Sensor auf einen statischen Permanentmagneten zu montieren und diesen Sensor so in die Nähe eines rotierenden ferromagnetischen Zahnrads zu plazieren, welches mit dem rotierenden Bauteil auf einer Achse rotiert, dass die Oberfläche des magneto-resistiven Sensors periodisch von den Zähnen des rotierenden Zahnrades verdeckt und wieder frei gegeben wird. Durch das Vorbeiziehen eines ferromagnetischen Zahnes ändert sich die magnetische Flussdichte in dem magneto-resistiven Sensor, der dadurch seinen elektrischen Widerstand ändert. Die Änderung des elektrischen Widerstands der magneto-resistiven Sensoren wird in den technischen Lehren dieser beiden Schriften dazu benutzt, den Durchgang der Grenze zwischen Zahn und Lücke festzustellen. In beiden Dokumenten werden Schwierigkeiten beschrieben, die Änderung des elektrischen Widerstandes des magneto-resistiven Sensors durch die Anordnung von Sensor, Modulator und Vormagnetisierungsmagnet so zu modulieren, dass der sogenannte Nulldurchgang sicher und präzise bestimmt werden kann. Der Nulldurchgang entspricht dabei der relativen Position von Sensor und Modulator, bei der der Sensor von einer Überdeckung durch einen Zahn zur Freigabe durch eine Lücke übergeht. Die in den Dokumenten beschriebenen Schwierigkeiten basieren auf der Beobachtung, dass in der Nähe der Oberfläche eines von magnetischen Feldlinien durchflossenen ferromagnetischen Materials und darüber hinausreichend in dem im Stand der Technik bisher verwendbaren räumlichen Gebiet in der Umgebung des Modulators, in dem Sensoren ohne Funktionseinbußen eingesetzt werden können, unharmonische Komponenten in dem sich durch den Modulator periodisch ändernden magnetischen Feld auftreten, die eine Positionsdetektion eines vorbeiziehenden Modulatorelementes erschweren, beziehungsweise mit einem höheren Unsicherheitsaufschlag belasten. Als Lösung wird in den Dokumenten vorgeschlagen, den Sensor selbst so zu ändern, dass die Effekte der oben genannten Verwerfungen durch Unterbringung von gekoppelten Sensoren an verschiedenen Positionen relativ zum Modulator ausgeglichen werden und damit die Detektion eines Nulldurchganges präziser erfolgt und damit wiederum ein Rechtecksignal mit hoher zeitlicher Flankenpräzision zur inkrementellen beziehungsweise absoluten Positionsbestimmung zur Verfügung steht.

Durch diese Vorgehensweise ist zwar der Nulldurchgang sehr präzise bestimmbar und damit auch der Winkel des Bauteils zum Zeitpunkt des Nulldurchgangs, aber die Auflösung der Winkelbestimmung wird durch die Anzahl der vorbeiziehenden Zähne limitiert. Um die Auflösung weiter zu erhöhen, wurde bereits die Modulation eines Sinussignals vorgeschlagen, durch die sich die Bauteilposition zwischen zwei Nulldurchgängen ermitteln lässt, jedoch werden dabei hohe Anforderungen an die Qualität, besonders die Oberwellenarmut des Signals gestellt. Um die Qualität des modulierten Sinussignals durch ein vorbeiziehendes ferromagnetisches Element zu erhöhen, wird in der Druckschrift DE 19521617 vorgeschlagen, die magneto-resistiven Leiterbahnen auf der Chipoberfläche zu krümmen, um hierdurch ebenfalls unharmonische Komponenten durch Dichteverwerfungen an den Kanten der Zahnoberfläche, welche die modulierte Signalqualität im magneto-resistiven Sensor stören können, zu reduzieren. Die in diesem Dokument vorgeschlagene Lösung stellt aber eine recht kostenintensive Lösung des Problems zur Erhöhung der Präzision der Winkelmessung dar.

Aufgabe der Erfindung ist es daher, ein Verfahren zur robusten und hochpräzisen Messung der absoluten Winkelposition eines rotierenden Bauteils zur Verfügung zu stellen, wobei die Winkelinformation auf dem Bauteil, die zur Bestimmung der absoluten Winkelposition benötigt wird, eine wesentlich geringere Dichte aufweist, als der Winkelauflösung des gesamten Verfahrens entspricht.

Eine weitere Aufgabe der vorliegenden Erfindung ist es, einen Winkelgeber zur Verfügung zu stellen, der nach dem vorgeschlagenen Verfahren ein Signal zur Verfügung stellt, aus dem die absolute Winkelposition mit hoher Präzision ermittelt werden kann, wobei die Signalqualität, das bedeutet Oberwellenarmut des Signals, gleich gut oder besser als im Stand der Technik sein soll.

Erfindungsgemäß wird die Aufgabe durch eine Überdeckung unterschiedlicher Sensorpaare mit einer voneinander abweichenden Überdeckungsperiode bei Rotation des Bauteils und Bestimmung der absoluten Winkelposition aus dem Vergleich der Erregungsstärke verschiedener Sensorpaare und der Sensoren je eines Sensorpaars untereinander gelöst wobei die Sensoren direkt auf der mindestens einen Magnetfeldquelle angeordnet sind und von einem Magentfeld vormagnetisiert werden, welches zur Normale der Ebene jedes einzelnen Sensors eine schräge Komponente unter einem Winkel von 5° bis 85° aufweist, wobei die Sensoren GMR-Sensoren sind. Weitere vorteilhafte Ausgestaltungen ergeben sich aus den Unteransprüchen.

Dieses Verfahren ermöglicht einen einfachen und kostengünstigen Aufbau, sowie eine kostengünstige Nachrüstung bestehender rotierender Bauteile, insbesondere Wellen, da das Bauteil selbst lediglich mit mindestens einem einfachen Modulator versehen werden muss, wobei der mindestens eine Modulator selbst keine mechanisch oder elektronisch aktiven Komponenten aufweist und weit weniger Elemente zur Sensorüberdeckung aufzuweisen braucht, als mit Hilfe dieses Verfahrens individuelle absolute Winkelpositionen ermittelbar sind. Durch die Trennung in zwei Einheiten, in ein erste Einheit, welche ortsfest in der Nähe des Modulators angeordnet ist und die elektronisch aktiven Komponenten enthält und eine zweite Einheit, welche lediglich eine mit einem Bauteil, insbesondere einer Welle, mitrotierende starre Komponente aufweist, ist es mit vergleichsweise wenig Aufwand möglich, im Bedarfsfall die Elektronik des Winkelgebers auszutauschen oder durch eine leistungsfähigere Elektronik zu ersetzen.

Im Gegensatz zu Verfahren, in welchen die absolute Winkelposition optisch durch Ablesen eines Codes aufgenommen wird, eignet sich dieses Verfahren durch die Modulation eines vorhandenen Magnetfeldes zur Anwendung in Bereichen, in denen Flugstäube, niederschlagende Dämpfe und weitere Immissionen vorhanden sind, welche die Funktion eines optischen Winkelaufnahmeverfahrens leicht stören oder gar völlig außer Funktion setzen können. Durch den einfachen Aufbau des Modulators und die wenigen im Vergleich zur Winkelauflösung benötigten Überdeckungselemente ist das gesamte Verfahren unempfindlicher gegenüber äußeren Störeinflüssen.

Auch gegenüber Verfahren, in denen eine inkrementelle oder eine absolute Winkelposition mit Hilfe eines rotierenden Polrades aufgenommen wird, hat dieses Verfahren den Vorteil, dass die rotierende selbst nicht magnetisierte Einheit unempfindlicher gegenüber einem äußeren magnetischen Feld ist, welches ein Polrad in seiner Funktionalität stören oder auch völlig zerstören könnte, ohne dass die Störung der mit dem Bauteil, insbesondere der Welle, mitrotierenden Einheit mit dem bloßen Auge erkennbar ist. Denn häufig werden große maschinelle Bauteile mit Hilfe von magnetischen Greifern positioniert und/oder montiert. Bei dieser Montage könnte die Feldstärke eines Magneten in einem magnetischen Polrad verändert werden, was zur Folge hat, dass die Aufnahme der magnetischen Feldstärke des Polrades zur Winkelaufnahme zu einem verfälschten Ergebnis und damit einer falschen Messung führen würde. Im Gegensatz dazu kann ein ferromagnetischer Modulator eingesetzt werden, der über eine hohe Koerzitivkraft verfügen kann, welches ein Maß für die Resistenz eines Materials ist in Gegenwart von magnetischen Greifern magnetisiert zu werden, ohne dass durch den Einsatz der magnetischen Greifer eine wesentliche Winkelaufnahmeverschlechterung zu erwarten wäre.

Die hohe und notwendige Präzision der Magnetfeldmodulation und Sensorerregung ist in dem erfindungsgemäßen Verfahren durch die Form des Modulators, seinen magnetischen Eigenschaften sowie durch die Feldrichtung des magnetischen Flusses am Ort der Sensoren abhängig. Die Winkelauflösung des mindestens einen Modulators kann dabei im Vergleich zur möglichen Winkelauflösung des Verfahrens vergleichsweise gering ausfallen, da die hohe Winkelauflösung durch eine Kombination von der relativen Stellung der verschiedenen überdeckenden Elemente des mindestens einen Modulators zueinander und eine elektronische und/oder digitalelektronische Interpretation eines mit Hilfe dieses Verfahrens oberwellenarm modulierten Sinussignals erreicht wird, welches synchron mit der Frequenz der Überdedeckung der Sensoren durch den Modulator schwingt.

Denn überraschenderweise wurde festgestellt, dass die Modulation eines Sinussignals im magneto-resistiven Sensor dadurch verbessert, das bedeutet oberwellenärmer, moduliert werden kann, wenn der Sensor von einem Magnetfeld vormagnetisiert wird, das eine zur Normale der Winkelscheibe schräge Komponente aufweist, wobei eine Vormagnetisierung durch ein homogenes Magnetfeld zu einer noch höheren Oberwellenarmut des modulierten Signals führt.

Ebenso wurde überraschenderweise festgestellt, dass eine solche Anordnung von magneto-resistivem Sensor und Vorzugsflussrichtung des zur Vormagnetisierung verwendeten Magneten besonders oberwellenarme Signale erzeugt, in der die Sensorebenennormale und Vorzugsrichtung parallel zueinander ausgerichtet sind.

Des Weiteren wurde überraschend festgestellt, dass die vom Modulator induzierte Schwankung der magnetischen Flussdichte und -richtung bei gewählter Feldstärke im gewählten Raumvolumen dadurch besonders oberwellenarm eingestellt werden kann, indem sowohl die Flussdichte der Vormagnetisierung, der Abstand des Raumvolumens vom Modulator, in welchem sich die Sensoren befinden, und die durch Stoffeigenschaften und Geometrie des Modulators bestimmte Fähigkeit, den magnetischen Fluss zu beeinflussen, aufeinander abgestimmt werden. Durch diese Abstimmung der Komponenten aufeinander kann ein Raumvolumen im Wirkungsumfeld des mindestens einen Modulators geschaffen werden, in welchem unharmonische Komponenten der periodischen Änderungen der magnetischen Flussdichte und - richtung weitgehend minimiert werden. Durch Variation und Optimierung dieser Parameter ist es unnötig, die im Stand der Technik vorgeschlagenen Änderungen an den Sensoren vorzunehmen, was es erlaubt, auf standardisierte und damit kostengünstigere Sensorelemente zurückzugreifen.

Zur Anwendung des Verfahrens haben sich die aus der Technologie von magnetischen Massenspeichern bekannten GMR-Sensoren als besonders geeignet herausgestellt, welche als Leseköpfe für die magnetisch auf die magnetischen Oberflächen von Festplattenspeichern geschriebenen Informationen dienen. Es wurde gefunden, dass sich GMR-Sensoren aufgrund ihres Empfindlichkeitsintervalls besonders für die Verwendung in dem erfindungsgemäßen Verfahren zur oberwellenarmen Modulation eines Sinussignals in einem Winkelgeber eignen. Es sind aber auch andere magneto-resistive Sensoren in diesem Verfahren unter Anpassung des Verhältnisses von Magnetfeldstärke zu Modulatorabstand, der räumlichen Ausrichtung und der geometrischen und/oder stofflichen Eigenschaften des mindestens einen Modulators einsetzbar.

Im Rahmen dieses Dokuments werden unter magneto-resistiven Sensoren solche Sensoren verstanden, die mit Hilfe des Hall-, MR-, AMR-, CMR, GMR und/oder allgemein XMR-Effektes ein elektrisch verwertbares Signal aus Schwankungen eines Magnetfeldes erzeugen.

Des Weiteren wurde festgestellt, dass durch Formgestaltung der die Sensoren periodisch überdeckenden Elemente des mindestens einen Modulators die Signalform weiter verbessert werden kann. In vorteilhafter Weise wird im Verfahren zur oberwellenarmen Modulation ein ferromagnetischer Modulator verwendet. Dabei ergeben sich die Parameter Permeabilität und geometrische Form des Modulatormaterials zur Minimierung des Klirrfaktors des Ausgangssignals.

Ebenso ist es vorteilhaft, den Abstand der magneto-resistiven Sensoren von dem mindestens einen Modulator bei gewählter magnetischer Flussdichte der mindestens einen Magnetfeldquelle so zu bemessen, dass der magnetfeldempfindliche Teil der magneto-resistiven Sensoren so positioniert ist, dass dieser von den Dichte- und Richtungsänderungen des magnetischen Flusses bei Rotation des Modulators unbeeinflusst bleibt, die in Folge des diskontinuierlichen Übergangs von Luft zu ferromagnetischem Material in der unmittelbaren Nähe der Oberfläche des mindestens einen Modulators unerwünschte unharmonische Komponenten aufweisen. Zwar ist die Ausprägung der Flussdichte- und -richtungsänderungen des Magnetfeldes im Sensor um so geringer, je weiter der Ort des Sensors vom Modulator entfernt ist, jedoch verarmen mit dem Abstand gleichzeitig die unharmonischen Oberwellenanteile. In einem optimalen Abstand der Modulatoren ist der unharmonische Anteil der Magnetfluss- und -richtungsschwingungen vernachlässigbar klein und die durch den Modulator bewirkten Änderungsamplituden sind noch groß genug, damit ein magneto-resistiver, speziell GMR-Sensor, diese mit hinreichender Genauigkeit zur Modulation des elektrischen Winkelgebersignals nutzen kann.

Ebenso hat es sich als vorteilhaft erwiesen, unterschiedliche Sensoren mit unterschiedlichen Modulationsfrequenzen, die bevorzugt nahe beieinander liegen, zu erregen, um damit nach dem Noniusprinzip die Winkelposition zwischen zwei Nulldurchgängen der Modulationsfrequenz zu ermitteln. Durch die Verwendung unterschiedlicher nahe beieinander liegenden Modulationsfrequenzen, deren Anzahl Nulldurchgänge bei einer Umdrehung des Bauteils beziehungsweise der Welle die Anzahl der möglichen eindeutig bestimmbaren Winkelpositionen weit unterschreitet, ist es möglich, die Winkelposition mit einer wesentlich höheren Präzision zu bestimmen, als es durch die Zählung und Identifizierung individueller Nulldurchgänge einer einzigen Modulationsfrequenz möglich ist. Die auf diese Weise erreichbare Unterteilung des Winkels liegt im Bereich des mathematischen Produktes der Anzahl der Nulldurchgänge der beiden Modulationsfrequenzen. Dieses Noniusverfahren, gelegentlich auch "Vernierverfahren" genannt, ist dem Fachmann auch aus der Werkzeugtechnik gut bekannt.

In bevorzugter Weise werden in dem Verfahren je zwei Sensoren eines Sensorpaars phasenverschoben um ein Viertel der Überdeckungsperiode mit gleicher Periodenlänge und unterschiedliche Sensorenpaare mit unterschiedlicher Periodenlänge überdeckt, wobei die unterschiedlichen Sensorenpaare mit Periodenlängen überdeckt werden, deren Differenz eine kürzere Überdeckungsperiodenlänge geteilt durch die Anzahl der längeren Überdeckungsperioden entlang einer Winkelperiode von 2 π des zu erfassenden Winkels beträgt. Durch den Phasenversatz von einem Viertel der Überdeckungsperiode der zweier Sensoren eines Sensorenpaares ist möglich, dass die Winkelposition zwischen zwei Nulldurchgängen aus diesen beiden phasenverschobenen Signalen eindeutig ermittelt werden kann. Durch die oben beschriebene Differenz der beiden Modulationssignale verschiebt sich der Nulldurchgang der beiden Modulationsfrequenzen zueinander um einen Bruchteil pro Überdeckungsperiode der kürzeren Überdeckungsperiode bis nach einem Umlauf des Bauteils bzw. der Welle um einen Winkel von 2π der Nulldurchgang der geringeren Modulationsfrequenz wieder zeitgleich auf einen Nulldurchgang der höheren Modulationsfrequenz trifft. Bei der oben beschriebenen Modulationsfrequenzdifferenz gibt es entlang eines Umlaufs des Bauteils beziehungsweise der Welle nur einen einzigen Punkt, an denen der Nulldurchgang der geringeren Modulationsfrequenz den Nulldurchgang der höheren Modulationsfrequenz trifft. Durch den Vergleich der Winkelinformation, die einem Sensorpaar entnommen werden kann, mit der Winkelinformation des anderen Sensorpaars ist es möglich, die Überdeckungsperiode eindeutig zu bestimmen.

Zur Durchführung des erfindungsgemäßen Verfahrens wird ein Winkelgeber zur Erfassung der absoluten Winkelposition eines rotierbaren Bauteils, insbesondere einer Welle, bestehend aus einer ersten ortsfesten Einheit, welche eine Auswerteelektronik aufweist, in der mindestens zwei unabhängige magneto-resistive Sensorpaare durch mindestens eine Magnetfeldquelle vormagnetisiert werden, wobei die Sensorpaare in unmittelbarer Nähe der Magnetfeldquelle angeordnet sind und wobei in einer zweiten mit dem Bauteil rotierbaren Einheit mindestens ein Modulator, der stellungsabhängig den magnetischen Fluss der Magnetfeldquelle am Ort der Sensorpaare in Dichte und/oder Richtung verändert, infolge seiner Rotation mit dem Bauteil die Sensoren periodisch überdeckt und deren Erregung beeinflusst, wobei die Sensoren je eines Sensorpaars so angeordnet sind, dass sie mit einem Phasenversatz einer viertel Überdeckungsperiode überdeckt werden, verwendet.

In vorteilhafter Weise besteht die mindestens eine Magnetfeldquelle aus einem Permanentmagneten und/oder Elektromagneten, wobei in besonders vorteilhafter Weise die Magnetisierungsrichtung des Magneten schräg zur Oberfläche des Magneten angeordnet ist. Bei der Optimierung des Ausgangssignals des Winkelgebers hat es sich herausgestellt, dass die magneto-resistiven Sensoren am besten durch eine schräg magnetisierte Permanentmagnetfolie vormagnetisiert werden. Hierdurch wird gewährleistet, dass die verschiedenen Sensoren entsprechend der Fertigungstoleranz bei der Herstellung der Permanentmagnetfolie mit einer gleichmäßigen, homogenen und gleich hohen wie gleich gerichteten Magnetisierung vormagnetisiert werden.

Bei einer Anordnung der magneto-resistiven Sensoren ist auch eine Anordnung vorteilhaft zur Erzeugung eines oberwellenarmen Signals verwendbar, bei der Vorzugsflussrichtung des zur Vormagnetisierung verwendeten Magneten und die Sensorebenennormale des mindestens einen Modulators parallel zueinander verlaufen.

Es sind auch andere hier nicht konkret benannte Anordnungs- und Richtungskombinationen verwendbar, die durch Abstimmung aufeinander zu sehr oberwellenarmen Signalen führen, beispielsweise eine schräge Anordnung von Sensorebene zur Vorzugsrichtung des zur Vormagnetisierung verwendeten Magneten.

Zur vorteilhaften Vormagnetisierung von GMR-Sensoren im Falle der schrägen Anordnung von Vorzugsrichtung des Vormagnetisierungsmagnetfeldes zur Sensoroberfläche beträgt der Winkel der bevorzugt eingesetzten schräg magnetisierten Permanentmagnetfolie oder des schräg magnetisierten Permanentmagneten und/oder Elektromagneten 5° - 85° zur Normale der Ebene jedes einzelnen Sensors, besonders vorteilhaft ungefähr 45° zur Normale der Ebene jedes einzelnen Sensors.

Durch die schräge Vormagnetisierung werden die magneto-resistiven Sensoren in einem linearen Arbeitsbereich gehalten, was dazu führt, dass das Ausgangssignal mit der Schwankung des Magnetfeldes oberwellenärmer wird. Durch eine parallele Ausrichtung der Sensoroberflächen mit der Ebene des mitrotierenden Modulators und die schräge Vormagnetisierung des Sensors treffen die Magnetfeldlinien auch schräg auf die Oberfläche des Modulators auf. Durch die periodische Überdeckung und Freigabe der Sensoren durch den Modulator ändert sich das Magnetfeld im Sensor sowohl in Richtung als auch in Dichte des Magnetflusses. Dadurch, dass die Rotationsebene des Modulators schräg zur Richtung des magnetischen Flusses ausgerichtet ist, ergibt sich zwischen Vormagnetisierungsmagnet und Modulator ein Raumvolumen des magnetischen Flusses, in dem die Dichteänderungen und die Richtungsänderungen hauptsächlich harmonische Komponenten aufweisen und deren unharmonische Komponenten vernachlässigbar gering sind.

Im Falle der zur Sensorebene parallelen Vormagnetisierung führt eine Magnetfeldsensitivierungsschicht, welche üblicherweise auf den Oberflächen magneto-resistiver Sensoren angebracht ist, zu einer Vormagnetisierung des Sensors. Diese so erzeugte Vormagnetisierung führt auch dazu, dass der Sensor in einem optimalen linearen Arbeitsbereich gehalten wird, was zu Signalen mit einem niedrigen Klirrfaktor, gleichbedeutend einen geringen Oberwellenanteil aufweisend, führt.

Im Fall, dass die Magnetfeldquelle ein Permanentmagnet oder eine schräg oder senkrecht magnetisierte Permanentmagnetfolie ist, hat es sich als vorteilhaft erwiesen, wenn der Magnet oder wenn die Magnetpartikel der magnetisierten Permanentmagnetfolie AlNiCo-, Sinter- oder Seltenerdmagnete sind.

Um ein Raumvolumen in der Nähe des Modulators zu erzeugen, in dem mit der Überdeckung die Magnetfeldstärke, also der magnetische Fluss, oder die Richtung des magnetischen Flusses in nahezu ausschließlich harmonischer Weise schwingt, hat es sich als vorteilhaft erwiesen, wenn die Feldstärke am Ort des unmodulierten Sensors 1 mT bis 300 mT, bevorzugt ungefähr 15 mT beträgt.

Unabhängig von der Anordnung des Sensors der Magneten und des Modulators kann es sich bei den Sensoren um Hallsensoren, MR-, AMR-, CMR-, GMRoder allgemein XMR-Sensoren handeln, besonders bevorzugt werden in dem erfindungsgemäßen Winkelgeber jedoch GMR-Sensoren.

Zur weiteren Optimierung eines oberwellenarmen Ausgangssignals des Winkelgebers sind die Sensoren direkt auf der mindestens einen Magnetfeldquelle angeordnet. Zur Anordnung eines magneto-resistiven Sensors auf einem Magneten kann es sich gemäß der oben stehenden vorteilhaften Ausführungen um einen exzentrisch auf der Polfläche eines in axialer Richtung axialsymmetrisch magnetisierten Stabmagneten angeordneten Sensor handeln. Besonders vorteilhaft hat sich jedoch erwiesen, wenn die Sensoren direkt auf die Oberfläche eines schräg magnetisierten Magneten aufgebracht werden. Besonders gute Ergebnisse wurden erzielt, wenn die Sensoren gemeinsam auf eine schräg magnetisierte Permanentmagnetfolie aufgebracht wurden, wobei die Permanentmagnetfolie aus einem zusammenhängenden Stück bestehen kann, auf der die Sensoren angeordnet sind. Bei der Wahl der oben genannten Parameter hat es sich als vorteilhaft erwiesen und es hat zu besonders oberwellenarmen Ausgangsignalen geführt, wenn die Sensoren in einem Bereich von 100 µm - 5 mm, besonders bevorzugt jedoch von 500 µm 1,5 mm entfernt von dem mindestens einem Modulator angebracht sind.

Bei der Anordnung von senkrecht angeordneten Sensoren, deren Sensoroberflächen senkrecht zu den vorbeiziehenden Modulatorüberdeckungselementen angeordnet sind, hat es sich als vorteilhaft erwiesen, wenn die Sensoren senkrecht auf einer senkrecht magnetisierten Permanentmagnetfolie angeordnet werden oder auf einen senkrecht geschnittenen und senkrecht magnetisierten Stabmagneten platziert werden.

Bei dem mindestens einem Modulator kann es sich um zwei oder auch mehr koaxial zur Achse des zu erfassenden Winkels angeordneten ferromagnetischen Zahnrädern mit Stirnrad- und/oder Planradverzahnung handeln. Im Fall eines Zahnrads mit Stirnradverzahnung sind die magneto-resistiven Sensoren parallel zur Ebene des Zahnrads nahe am Zahnkranz angeordnet, wobei die einzelnen Zähne des Zahnrads die Sensoren bevorzugt abwechselnd freigeben und wieder überdecken. Es ist aber auch möglich, die Sensoren parallel zur Tangente der Stirnfläche anzuordnen, so dass bei Rotation des ferromagnetischen Zahnrads je ein Zahn je einem magneto-resistiven Sensor periodisch nahe kommt und sich von diesem wieder entfernt. Bei einer Planradverzahnung sind die magneto-resistiven Sensoren vorzugsweise parallel zur Ebene des Zahnrads angebracht, können aber auch tangential zum planradverzahnten Zahnrad angeordnet sein.

Zur Erreichung der unterschiedlichen Modulationsfrequenzen für verschiedene Sensorpaare hat es sich als vorteilhaft erwiesen, wenn der mindestens eine Modulator aus einer Gruppe von drei koaxialen Zahnrädern besteht, wobei die Zahnräder 64, 63 und 56 Zähne aufweisen. Durch den Vergleich der Sensorsignale, welche durch das Zahnrad mit 64 Zähnen erzeugt werden, mit den Signalen, die durch das Sensorpaar an dem Zahnrad mit 63 Zähnen erzeugt werden, ist bereits eine eindeutige Winkelauflösung möglich, wobei der Vergleich der Nulldurchgangslage der Sensoren eine individuelle Überdeckungsperiode identifiziert, und wobei aus den Signalen der Sensorpaare, in denen die je zwei Sensoren mit einem Phasenversatz von einem Viertel einer Überdeckungsperiode erregt werden, auch die Winkelposition innerhalb der Überdeckungsperiode ermittelbar ist.

Jedoch kann die Anzahl der Zähne auf den unterschiedlichen Modulatoren frei gewählt werden, solange aus den sich daraus über eine Bauteilumdrehung ergebenen Verschiebungen der Nulldurchgänge einzelner Zähne eindeutig eine Winkelposition ableiten lässt.

Durch das zusätzliche Zahnrad und das zusätzliche Sensorpaar, welches 56 mal eine Überdeckungsperiode während eines Umlaufs durchläuft, ist ein zusätzliches redundantes Signal vorhanden, welches eine durch die Auswerteelektronik ermittelte Position bestätigt oder diese negiert. Denn in vielen industriellen Anwendungen muss damit gerechnet werden, dass die Signale durch starke elektromagnetische Impulse, beispielsweise durch startende Maschinen oder durch plötzliche elektrische Schaltvorgänge, gestört werden. Des Weiteren ist es durch die Verwendung eines redundanten Signales möglich, die Winkelauflösung, welche sich bei Verwendung ohne redundante Signale durch temperatur- und alterungsbedingte Drift der verwendeten Sensoren verschlechtern könnte, aufrechtzuerhalten.

Außer den Zahnrädern ist es auch möglich, einen Modulator aus einer ferromagnetischen Scheibe zu konstruieren, wobei die Scheibe radiale Schlitze, Vertiefungen oder Erhöhungen aufweist. Die Funktion der die Sensoren überdeckenden und wieder freigebenden Zähne des oben genannten Zahnrads übernehmen hier die radialen Schlitze, Vertiefungen oder Erhöhungen. Bei Verwendung einer Scheibe ist es möglich, durch Variationen der Scheibenwandstärke, welche im Bereich von 0,1 mm bis 1 mm liegt, und damit das Ausmaß der Fähigkeit, das Magnetfeld des Vormagnetisierungsmagneten zu beeinflussen, die Amplitude der Magnetfeldschwingung bei Rotation des Modulators zu kontrollieren. Hierdurch ergibt sich ein weiterer Optimierungsparameter zur Erschaffung eines Raumvolumens, in dem die magnetische Flussdichte sowohl in ihrem Betrag als auch in ihrer Richtung mit der Modulationsfrequenz schwingt. Auch bei der Verwendung der ferromagnetischen radialen Schlitze, Vertiefungen oder Erhöhungen aufweisenden Scheibe hat es sich als vorteilhaft erwiesen, wenn die Scheibe drei konzentrische Ringe aus äquidistant angeordneten Schlitzen aufweist, wobei die Ringe aus 64, 63 und 56 Schlitzen bestehen und die Winkelinformation wie oben erläutert, ermittelt werden.

In dem erfindungsgemäßen Verfahren ist es nicht notwendig, dass der Modulator bewegt wird. Jede Winkelinformation ist auch in Ruhestellung des Modulators aus den korrespondierenden Sensorsignalen ableitbar.

Die Erfindung wird im Weiteren anhand der Figuren näher erläutert.

Es zeigt
- Fig. 1: einen Schnitt eines am Ende einer Welle zentriert angeordneten Winkelgebers mit axialem Schnitt durch Winkelgeber, Wellenlager und Welle,
- Fig. 2: die Draufsicht einer Wellengeberscheibe und
- Fig. 3: zwei Oszillatordiagramme eines einzelnen modulierten magneto-resistiven Sensors, wobei der Sensor in den einzelnen Diagrammen unterschiedlich vormagnetisiert wurde.

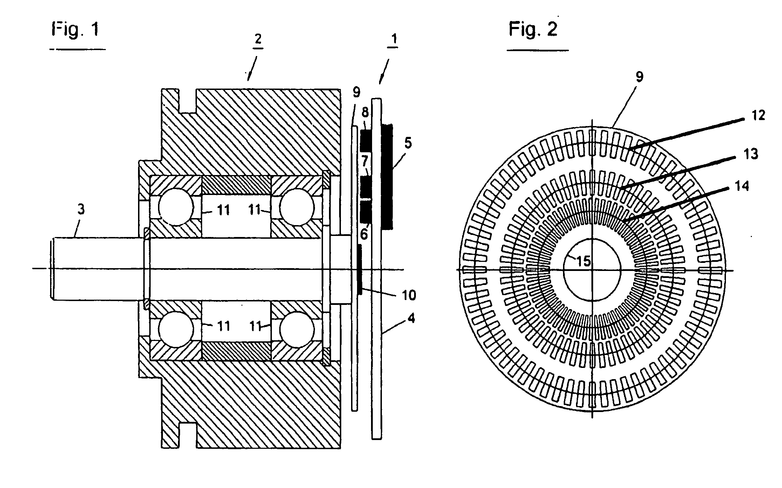

Figur 1 zeigt in einem Längsschnitt eine hintereinanderliegende Anordnung aus erfindungsgemäßem Winkelgeber 1, einem Lagergehäuse 2 und einer Welle 3. Der Winkelgeber 1 besteht aus zwei Einheiten, wobei die erste Einheit auf einer Montageplatte 4 eine Auswerteelektronik 5 aufweist, die auf einer ersten Seite der ersten Einheit befestigt ist und drei magneto-resistiven Sensorpaare, 6, 7 und 8, die auf eine hier nicht eingezeichnete Permanentmagnetfolie auf einer zweiten zum Modulator/Scheibe 9 gerichteten Seite der ersten Einheit angeordnet sind. Die erste Einheit wird mit Hilfe eines in der Figur nicht gezeigten Gehäuses an dem Lagergehäuse 2 fixiert. Der Modulator/Scheibe 9 ist auf der Kopffläche der Welle 3 mit einem Befestigungselement 10 angeordnet und ist fest mit der Welle verbunden. Die Welle 3 ist in einem Doppellager 11 gelagert, welches in dem Lagergehäuse 2 aufgenommen ist. Bei Rotation der Welle 3 dreht sich der Modulator 9 mit ihr und verändert den magnetischen Fluss am Ort der Sensorpaare 6, 7 und 8 durch periodische Überdeckung und Freigabe.

Figur 2 zeigt die Modulatorscheibe 9 in einer Draufsicht. Deutlich zu erkennen sind drei konzentrische Ringe mit regelmäßig radial angeordneten trapezoidalen Schlitzen 12, 13 und 14, welche die magneto-resistiven Sensoren periodisch überdecken. Der äußerste Ring aus radialen Schlitzen 12 weist 64 Schlitze auf, der mittlere Ring aus radialen Schlitzen 13 weist 56 Schlitze auf und der innerste Ring aus radialen Schlitzen 14 weist 63 Schlitze auf. Die zentrische Aufnahmebohrung 15 mit variablem Innendurchmesser kann je nach zu bemessender Welle 3 zur Anbringung an den Durchmesser der Welle 3 angepasst werden.

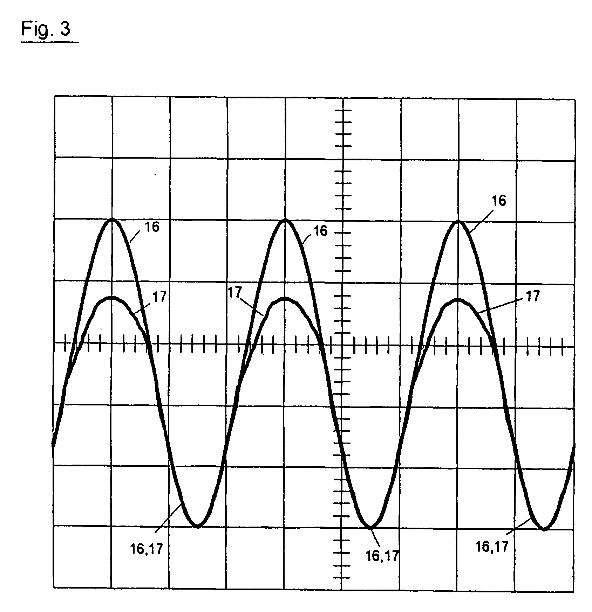

Figur 3 zeigt ein Diagramm des Signalverlaufs eines magneto-resistiven Sensors bei unterschiedlich gewählter Magnetisierungsrichtung. Der optimierte Signalverlauf 16 zeigt einen symmetrisch periodischen sinusoiden Verlauf über mehrere Perioden, aus denen die Winkelinformation durch Messung der Amplitude zu einem beliebigen Zeitpunkt ermittelt werden kann. Hingegen weist der Signalverlauf 17 des Sensors, der mit einer vom Optimum abweichenden Magnetisierungsrichtung vormagnetisiert worden ist, deutliche Asymmetrien, gleichbedeutend einen hohen Klirrfaktor aufweisend, auf. In dem Diagramm weist der Signalverlauf 16 einen nahezu idealen Sinusverlauf auf, hingegen ist der Signalverlauf des Signals 17 deutlich in den positiven Halbwellen gegenüber der idealen Sinusform verzerrt, was gleichbedeutend mit einem nicht zu vernachlässigenden Oberwellenanteil oder einem hohen Klirrfaktor ist.

Während die vorliegende Erfindung unter Bezugnahme auf das vorhergehende bevorzugte Ausführungsbeispiel beschrieben und erläutert wurde, ist es für den Fachmann offensichtlich, das Veränderungen in der Form und den Einzelheiten möglich sind, ohne den Bereich der Erfindung zu verlassen wie er in den nachfolgenden Ansprüchen definiert ist.

Wenn in diesem Dokument MR-Sensoren oder magneto-resistive Sensoren gelehrt werden, so werden damit die Technologien MR, AMR, GMR, TMR, CMR, Hall- und allgemein XMR-Sensoren gleichermaßen gemeint.

Ebenso sind die Frequenzverhältnisse der Modulatoren oder Modulatorabschnitte auch in jedem anderen Verhältnis zueinander wählbar, sofern sich daraus eine eindeutige Winkelposition ermittelbar ist.

Unter einer Überdeckungsperiode wird gemäß der erfindungsgemäßen Lehre der Winkel gemeint, den der Modulator zwischen dem Beginn einer Sensorüberdeckung durch ein Überdeckungselement des Modulators, darauffolgend die Sensorüberdeckung selbst, der beginnenden Wiederfreigabe, die Wiederfreigabe und bis zum nächsten Beginn einer nächsten Sensorüberdeckung durch einen benachbarten Zahn, beziehungsweise ein benachbartes Überdeckungselement, durchläuft. Die Zahl der Überdeckungsperioden pro Sensor, welcher von dem mindestens einen Modulator überdeckt und wiederfreigegeben wird, entlang eines kompletten Bauteilumlaufes entspricht dabei exakt der Anzahl der zur Sensorüberdeckung verwendeten Überdeckungselemente des Modulators.

Dem Fachmann ist geläufig, dass zur Identifikation der Winkelposition des Bauteils eine Zahl von 0 bis 2 π angegeben wird, wobei die Stellung des Bauteils in Position 0 mit der Stellung 2 π übereinstimmt, mit dem Unterschied, dass das Bauteil beziehungsweise der damit gekoppelte Modulator bei einer Umdrehung von 2 π einen kompletten Umlauf getätigt hat. Zu unterscheiden davon ist der Bauteil- beziehungsweise Modulatorumlauf gemäß der oben erläuterten Winkelbeziehung eines Bauteil- beziehungsweise Modulatorumlaufes von einer Periode 0 bis 2 π, die sich nicht auf einen Bauteilumlauf bezieht, sondern auf die Winkeldurchschreitung entlang einer Überdeckungsperiode gemäß der oben stehenden Definition. In beiden Definitionen verhält sich der Winkel, welcher im Maß von 0 bis 2 π normiert angegeben wird, linear proportional zum tatsächlich zurückgelegten Winkel des Bauteils beziehungsweise des gekoppelten Modulators.

Die Überdeckungsperiode kann in dem erfindungsgemäßen Verfahren und in dem erfindungsgemäßen Winkelgeber ein Verhältnis von Überdeckungslänge zu Wiederfreigabelänge haben, welches kleiner 1, gleich 1 oder größer 1 ist, wobei unter der Überdeckungslänge der Winkel gemeint ist, den das Bauteil beziehungsweise der Modulator durchschreiten kann, ohne dass der Sensor wiederfreigegeben wird und entsprechend ist die Wiederfreigabelänge der Winkel, welcher vom Bauteil beziehungsweise Modulator durchschritten werden kann, ohne dass der Sensor überdeckt wird. Die Summe aus Überdeckungslänge und Wiederfreigabelänge entspricht dabei der Überdeckungsperiode. Das bedeutet, dass das Puls-Pause-Verhältnis, häufig auch Tastverhältnis oder Duty Cycle genannt, in dem Verfahren frei wählbar ist und kann zur Optimierung eines oberwellenarmen Signals variiert werden.

Die Sensorüberdeckung kann in dem Verfahren auch kontinuierlich von überdeckt zu wiederfreigegeben wechseln. Ein binärer Wechsel von Überdeckung zu Wiederfreigabe bedeutet dabei eine Extremposition bei der Parameteroptimierung wie ein kontinuierlicher harmonischer Übergang von überdeckt zu wiederfreigegeben. In jedem Falle ist aber die Überdeckungsperiodenlänge durch korrespondierende Winkelpositionen gemäß der oben erläuterten Definition eindeutig definiert.

### Bezugszeichenliste

- 1: Winkelgeber
- 2: Lagergehäuse
- 3: Welle
- 4: Montageplatte
- 5: Auswerteelektronik
- 6: magneto-resistives Sensorpaar
- 7: magneto-resistives Sensorpaar
- 8: magneto-resistives Sensorpaar
- 9: Modulator/Scheibe
- 10: Befestigungselement
- 11: Doppellager
- 12: Ring aus radialen Schlitzen
- 13: Ring aus radialen Schlitzen
- 14: Ring aus radialen Schlitzen
- 15: Aufnahmebohrung
- 16: optimierter Signalverlauf
- 17: nicht optimierter Signalverlauf

## Patentansprüche

1. Verfahren zur Erfassung einer absoluten Winkelposition eines rotierbaren Bauteils, insbesondere einer Welle (3), bei dem in einer ersten ortsfesten Einheit, welche eine Auswerteelektronik (5) aufweist, mindestens zwei unabhängige magneto-resistive Sensorpaare (6, 7, 8) durch mindestens eine Magnetfeldquelle vormagnetisiert werden, wobei die Sensorpaare (6, 7, 8) in unmittelbarer Nähe der Magnetfeldquelle angeordnet sind und wobei in einer zweiten mit dem Bauteil rotierbaren Einheit mindestens ein Modulator (9), der stellungsabhängig den magnetischen Fluss der Magnetfeldquelle am Ort der Sensorpaare (6, 7, 8) in Dichte und/oder Richtung verändert, infolge seiner Rotation mit dem Bauteil die Sensoren periodisch überdeckt und deren Erregung beeinflusst, wobei die Sensoren je eines Sensorpaars (6, 7, 8) so angeordnet sind, dass sie durch die Überdeckungselemente des Modulators mit einem Winkelunterschied von einer viertel Überdeckungsperiode überdeckt werden,
**gekennzeichnet durch**
eine Überdeckung unterschiedlicher Sensorpaare (6, 7, 8) mit einer voneinander abweichenden Überdeckungsperiodenlänge bei Rotation des Bauteils und Bestimmung des absoluter Winkels **durch** Vergleich der Er-regungsstärke verschiedener Sensorpaare (6, 7, 8) und Sensoren je eines Sensorpaars (6, 7, 8) untereinander, wobei die Sensoren direkt auf der mindestens einen Magnetfeldquelle angeordnet sind und von einem Magnetfeld vormagnetisiert werden, welches zur Normale der Ebene jedes einzelnen Sensors eine schräge Komponente unter einem Winkel von 5° bis 85° aufweist, wobei die Sensoren GMR-Sensoren sind.

2. Verfahren nach Anspruch 1,
**gekennzeichnet durch**
einen zumindest teilweise aus ferromagnetischem Material bestehenden Modulator (9).

3. Verfahren nach Anspruch 2,
**gekennzeichnet durch**
einen Abstand der magneto-resistiven Sensoren von dem mindestens einen Modulator (9) bei gewählter magnetischer Flussdichte der mindestens einen Magnetfeldquelle, der so bemessen wird, dass der magnetfeldempfindliche Teil der magneto-resistiven Sensoren so positioniert ist, dass dieser von den Dichte- und Richtungsänderungen des magnetischen Flusses bei Rotation des Modulators (9) unbeeinflusst bleibt, die in Folge des diskontinuierlichen Übergangs von Luft zu ferromagnetischem Material in der unmittelbaren Nähe der Oberfläche des mindestens einen Modulators (9) unerwünschte unharmonische Komponenten aufweisen.

4. Verfahren nach Anspruch 1 bis 3,
**gekennzeichnet durch**
eine unterschiedliche Überdeckungsperiodenlänge, deren Differenz eine kürzere Überdeckungsperiodenlänge geteilt **durch** die Anzahl der längeren Überdeckungsperioden entlang einer Winkelperiode von 2 π des zu erfassenden Winkels beträgt.

5. Winkelgeber (1) zur Erfassung der absoluten Winkelposition eines rotierbaren Bauteils, insbesondere einer Welle (3), bestehend aus einer ersten ortsfesten Einheit, welche eine Auswerteelektronik (5) aufweist, in der mindestens zwei unabhängige magneto-resistive Sensorpaare (6, 7, 8) durch mindestens eine Magnetfeldquelle vormagnetisiert werden, wobei die Sensorpaare (6, 7, 8) in unmittelbarer Nähe der Magnetfeldquelle angeordnet sind und wobei in einer zweiten mit dem Bauteil rotierbaren
Einheit mindestens ein Modulator (9), der stellungsabhängig den magnetischen Fluss der Magnetfeldquelle am Ort der Sensorpaare (6, 7, 8) in Dichte und/oder Richtung verändert, infolge seiner Rotation mit dem Bauteil die Sensoren periodisch Überdeckt und deren Erregung beeinflusst, wobei die Sensoren je eines Sensorpaars (6, 7, 8) so angeordnet sind, dass sie durch die Überdeckungselemente des Modulators mit einem Winkelunterschied von einer viertel Überdeckungsperiode überdeckbar sind,
**dadurch gekennzeichnet,**
**dass** die Überdeckung unterschiedlicher Sensorpaare (6, 7, 8) mit einer voneinander abweichenden Überdeckungsperiodenlänge bei Rotation des Bauteils und Bestimmung des absoluter Winkels durch Vergleich der Er-regungsstärke verschiedener Sensorpaare (6, 7, 8) und Sensoren je eines Sensorpaars (6, 7, 8) untereinander, wobei die Sensoren direkt auf der mindestens einen Magnetfeldquelle angeordnet sind und von einem Magnetfeld vormagnetisiert werden, welches zur Normale der Ebene jedes einzelnen Sensors eine schräge Komponente unter einem Winkel von 5° bis 85° aufweist, wobei die Sensoren GMR-Sensoren sind.

6. Winkelgeber gemäß Anspruch 5,
**dadurch gekennzeichnet,**
**dass** die mindestens eine Magnetfeldquelle aus einem Permanentmagneten und/oder Elektromagneten, bevorzugt aus einer schräg magnetisierten Permanentmagnetfolie, besteht.

7. Winkelgeber gemäß Anspruch 5 oder 6,
**dadurch gekennzeichnet,**
**dass** das Magnetfeld gegenüber den Sensoroberflächen unter einem Winkel von 5° bis 85°, bevorzugt von ungefähr 45° zur Normale der Ebene jedes einzelnen Sensors ausgerichtet ist.

8. Winkelgeber gemäß einem der Ansprüche 6 bis 7,
**dadurch gekennzeichnet,**
**dass** der mindestens eine Magnet ein AlNiCo-, Sinter- oder Seitenerdmagnet ist.

9. Winkelgeber gemäß einem der Ansprüche 5 bis 8,
**dadurch gekennzeichnet,**
**dass** die unmodulierte Magnetfeldstärke am Ort eines Sensors 1 mT bis 300 mT, bevorzugt ungefähr 15 mT beträgt.

10. Winkelgeber gemäß Anspruch 5 bis 9,
**dadurch gekennzeichnet,**
**dass** die Sensoren direkt auf der mindestens einen Magnetfeldquelle angeordnet sind.

11. Winkelgeber gemäß Anspruch 5 bis 9,
**dadurch gekennzeichnet,**
**dass** die Normale der Sensoroberfläche parallel, schräg oder senkrecht zur Rotationsachse des mindestens einen Modulators ausgerichtet ist.

12. Winkelgeber gemäß Anspruch 5 bis 11,
**dadurch gekennzeichnet,**
**dass** die Sensoren in einem Bereich von 100 µm bis 5 mm, bevorzugt von 500 µm bis 1,5 mm entfernt von dem mindestens einen Modulator (9) angeordnet sind.

13. Winkelgeber gemäß einem der Ansprüche 5 bis 12,
**dadurch gekennzeichnet,**
**dass** der mindestens eine Modulator (9) zur Achse des zu erfassenden Winkels aus mindestens zwei koaxial angeordneten ferromagnetischen Zahnrädern mit einer Stirnrad- und/oder Planradverzahnung besteht.

14. Winkelgeber nach Anspruch 13,
**dadurch gekennzeichnet,**
**dass** die mindestens zwei Zahnräder eine unterschiedliche Anzahl Zähne aufweisen, bevorzugt paarweise einen Unterschied von einem Zahn aufweisen.

15. Winkelgeber gemäß einem der Ansprüche 5 bis 14,
**dadurch gekennzeichnet,**
**dass** der mindestens eine Modulator (9) aus einer Gruppe von drei koaxialen Zahnrädern besteht, wobei die Zahnräder 64, 63 und 56 Zähne aufweisen.

16. Winkelgeber gemäß einem der Ansprüche 5 bis 15,
**dadurch gekennzeichnet,**
**dass** der mindestens eine Modulator (9) zur Achse des zu erfassenden Winkels aus mindestens einer koaxial angeordneten ferromagnetischen Scheibe (9) besteht, welche radiale Schlitze, Vertiefungen oder Erhöhungen aufweist.

17. Winkelgeber gemäß Anspruch 16,
**dadurch gekennzeichnet,**
**dass** die mindestens eine koaxial angeordnete ferromagnetische Scheibe (9) mindestens zwei konzentrische koaxial angeordnete Ringe (12, 13 14), die aus äquidistant angeordneten Schlitzen, Vertiefungen oder Erhöhungen bestehen, aufweist.

18. Winkelgeber gemäß Anspruch 17,
**dadurch gekennzeichnet,**
**dass** die mindestens eine koaxial angeordnete ferromagnetische Scheibe (9) drei konzentrische koaxial angeordnete Ringe (12, 13, 14), die aus äquidistant angeordneten Schlitzen bestehen, aufweist, wobei die Ringe 64, 63 und 56 Schlitze aufweisen.

## Claims

1. Method for the detection of an absolute angular position of a rotatable element, in particular a shaft (3), wherein in a first stationary unit comprising evaluation electronics (5) at least two independent magnetoresistive pairs of sensors (6, 7, 8) are premagnetized by at least one magnetic field source, wherein the pairs of sensors (6, 7, 8) are arranged in direct proximity to the magnetic field source, and wherein in a second unit rotatable together with the element at least one modulator (9) that changes the density and/or direction of the magnetic flux of the magnetic field source at the location of the pairs of sensors (6, 7, 8) depending on its position, periodically covers the sensors as a consequence of its rotation with the element and influences the excitation thereof, wherein the sensors of one pair of sensors (6, 7, 8) each are arranged such that they are covered by the covering elements of the modulator with an angular difference of one fourth of a covering period,
**characterized by**
a covering of different pairs of sensors (6, 7, 8) with differing durations of covering periods in a rotation of the element and the determination of the absolute angle by comparison of the excitation power of different pairs of sensors (6, 7, 8) and of sensors within one pair of sensors (6, 7, 8), wherein the sensors are disposed directly on the at least one magnetic field source and are premagnetised by a magnetic field which comprises an oblique component at an angle of 5° to 85° to the normal of the plane of each individual sensor, wherein the sensors are GMR sensors.

2. Method according to claim 1,
**characterized by**
a modulator (9) at least partially consisting of ferromagnetic material.

3. Method according to claim 2,
**characterized by**
a distance of the magnetoresistive sensors from the at least one modulator (9) with a selected magnetic flux density of the at least one magnetic field source, the distance being dimensioned such that the portion of the magnetoresistive sensors sensitive to the magnetic field is positioned such that the same remains without influence by the changes of the density and direction of the magnetic flux in the rotation of the modulator (9), which changes comprise undesired inharmonic components as a consequence of the discontinuous transition of air to ferromagnetic material in direct proximity to the surface of the at least one modulator (9).

4. Method according to claims 1 to 3,
**characterized by**
different durations of covering periods the difference of which is a shorter duration of the covering period divided by the number of the longer covering periods along an angle period of the angle to be detected of 2 π.

5. Angle transmitter (1) for the detection of the absolute angular position of a rotatable element, in particular a shaft (3), consisting of a first stationary unit comprising evaluation electronics (5) in which at least two independent magnetoresistive pairs of sensors (6, 7, 8) are premagnetized by at least one magnetic field source, wherein the pairs of sensors (6, 7, 8) are arranged in direct proximity to the magnetic field source, and wherein in a second unit rotatable together with the element at least one modulator (9) that changes the density and/or direction of the magnetic flux of the magnetic field source at the location of the pairs of sensors (6, 7, 8) depending on its position periodically covers the sensors as a consequence of its rotation with the element and influences the excitation thereof, wherein the sensors of one pair of sensors (6, 7, 8) each are arranged such that they are covered by the covering elements of the modulator with an angular difference of one fourth of a covering period,
**characterized in that**
different pairs of sensors (6, 7, 8) are covered at differing durations of covering periods in a rotation of the element and the determination of the absolute angle results from the comparison of the excitation power of different pairs of sensors (6, 7, 8) and of sensors within one pair of sensors (6, 7, 8), wherein the sensors are disposed directly on the at least one magnetic field source and are premagnetised by a magnetic field which comprises an oblique component at an angle of 5° to 85° to the normal of the plane of each individual sensor, wherein the sensors are GMR sensors.

6. Angle transmitter according to claim 5,
**characterized in that**
the at least one magnetic field source consists of a permanent magnet and/or an electromagnet, preferably of an obliquely magnetized permanent magnetic foil.

7. Angle transmitter according to claim 5 or 6,
**characterized in that**
the magnetic field is oriented with respect to the sensor surfaces at an angle of 5° to 85°, preferably of approx. 45°, to the normal of the plane of each individual sensor.

8. Angle transmitter according to one of claims 6 to 7,
**characterized in that**
the at least one magnet is an AlNiCo-, sintered powder or rare-earth magnet.

9. Angle transmitter according to one of claims 5 to 8,
**characterized in that**
the unmodulated magnetic field strength at the location of a sensor is 1 mT to 300 mT, preferably approx. 15 mT.

10. Angle transmitter according to claims 5 to 9,
**characterized in that**
the sensors are arranged directly on the at least one magnetic field source.

11. Angle transmitter according to claims 5 to 9,
**characterized in that**
the normal of the sensor surface is oriented in parallel, diagonally or perpendicularly to the axis of rotation of the at least one modulator.

12. Angle transmitter according to claims 5 to 11,
**characterized in that**
the sensors are arranged at a distance from the at least one modulator (9) in the range of 100 µm to 5 mm, preferably 500 µm to 1.5 mm.

13. Angle transmitter according to one of claims 5 to 12,
**characterized in that**
the at least one modulator (9) consists of at least two coaxially arranged ferromagnetic gearwheels with a gearing of cylindrical gear and/or crowngear towards the axis of the angle to be detected.

14. Angle transmitter according to claim 13,
**characterized in that**
the at least two gearwheels have a different number of teeth, preferably have a difference of one tooth in pairs.

15. Angle transmitter according to one of claims 5 to 14,
**characterized in that**
the at least one modulator (9) consists of a group of three coaxial gearwheels, the gearwheels comprising 64, 63 and 56 teeth.

16. Angle transmitter according to one of claims 5 to 15,
**characterized in that**
the at least one modulator (9) consists of at least one coaxially arranged ferromagnetic disk (9) towards the axis of the angle to be detected, the disk comprising radial slots, indentations or elevations.

17. Angle transmitter according to claim 16,
**characterized in that**
the at least one coaxially arranged ferromagnetic disk (9) comprises at least two concentric, coaxially arranged rings (12, 13, 14) consisting of equidistantly arranged slots, indentations or elevations.

18. Angle transmitter according to claim 17,
**characterized in that**
the at least one coaxially arranged ferromagnetic disk (9) comprises three concentric, coaxially arranged rings (12, 13, 14) consisting of equidistantly arranged slots, wherein the rings comprise 64, 63 and 56 slots.

## Revendications

1. Procédé destiné à déterminer une position angulaire absolue d'un composant rotatif, en particulier d'un arbre (3), dans lequel procédé, dans une première unité fixe comportant une électronique d'évaluation (5), au moins deux paires de capteurs magnétorésistants indépendants (6, 7, 8) sont prémagnétisés par au moins une source de champ magnétique, les paires de capteurs (6, 7, 8) étant disposés à proximité directe de la source de champ magnétique et, dans une seconde unité en rotation avec le composant, au moins un modulateur (9), suite à sa rotation avec le composant, recouvrant périodiquement les capteurs et influençant leur excitation, ce modulateur modifiant en densité et/ou en direction, en fonction de la position, le flux magnétique de la source de champ magnétique à l'emplacement des paires de capteurs (6, 7, 8), les capteurs de chaque paire de capteurs (6, 7, 8) étant disposés de telle sorte qu'ils sont recouverts par les éléments de recouvrement du modulateur présentant une différence angulaire d'un quart de période de recouvrement,
**caractérisé par**
un recouvrement de différentes paires de capteurs (6, 7, 8) présentant des durées de périodes de recouvrement se différenciant les unes des autres lors de la rotation du composant et la détermination de la position angulaire absolue par comparaison de la force d'excitation de différentes paires de capteurs (6, 7, 8) et de capteurs provenant d'une paire de capteurs (6, 7, 8) entre eux, les capteurs étant disposés directement sur ladite au moins une source de champ magnétique et étant prémagnétisés par un champ magnétique qui présente, par rapport à la normale du plan de chaque capteur particulier, un composant oblique à un angle de 5° à 85°, les capteurs étant des capteurs GMR.

2. Procédé selon la revendication 1,
**caractérisé par**
un modulateur (9) constitué au moins partiellement d'un matériau ferromagnétique.

3. Procédé selon la revendication 2,
**caractérisé par**
une distance des capteurs magnétorésistants dudit au moins un modulateur (9) pour la densité de flux magnétique choisie de ladite au moins une source de champ magnétique, qui est calculée de telle sorte que la partie sensible au champ magnétique des capteurs magnétorésistants est positionnée de telle sorte que celle-ci n'est pas influencée par les modifications de densité et de direction du flux magnétique lors de la rotation du modulateur (9), qui, suite à la discontinuité du passage de l'air au matériau ferromagnétique à proximité directe de la surface dudit au moins un modulateur (9), comportent des composants non harmoniques indésirables.

4. Procédé selon les revendications 1 à 3,
**caractérisé par**
une durée de période de recouvrement différente, dont la différence est une durée de période de recouvrement plus courte divisée par le nombre de périodes de recouvrement plus longues selon une période angulaire de 2 π de l'angle devant être déterminé.

5. Capteur angulaire (1) destiné à déterminer la position angulaire absolue d'un composant rotatif, en particulier d'un arbre (3), constitué d'une première unité fixe, comportant une électronique d'évaluation (5) dans laquelle au moins deux paires de capteurs magnétorésistants indépendants (6, 7, 8) sont prémagnétisés par au moins une source de champ magnétique, les paires de capteurs (6, 7, 8) étant disposés à proximité directe de la source de champ magnétique et, dans une seconde unité en rotation avec le composant, au moins un modulateur (9), suite à sa rotation avec le composant, recouvrant périodiquement les capteurs et influençant leur excitation, ce modulateur modifiant en densité et/ou en direction, en fonction de la position, le flux magnétique de la source de champ magnétique à l'emplacement des paires de capteurs (6, 7, 8), les capteurs de chaque paire de capteurs (6, 7, 8) étant disposés de telle sorte qu'ils peuvent être recouverts par les éléments de recouvrement du modulateur présentant une différence angulaire d'un quart de période de recouvrement,
**caractérisé par le fait**
**que** le recouvrement de différentes paires de capteurs (6, 7, 8) présentant des durées de périodes de recouvrement se différenciant les unes des autres lors de la rotation du composant et la détermination de la position angulaire absolue par comparaison de la force d'excitation de différentes paires de capteurs (6, 7, 8) et de capteurs provenant d'une paire de capteurs (6, 7, 8) entre eux, les capteurs étant disposés directement sur ladite au moins une source de champ magnétique et étant prémagnétisés par un champ magnétique qui présente, par rapport à la normale du plan de chaque capteur particulier, un composant oblique à un angle de 5° à 85°, les capteurs étant des capteurs GMR.

6. Capteur angulaire selon la revendication 5,
**caractérisé par le fait**
**que** ladite au moins une source de champ magnétique est constituée d'un aimant permanent et/ou d'un électroaimant, préférentiellement d'une feuille d'aimant permanent magnétisée de façon oblique.

7. Capteur angulaire selon la revendication 5 ou 6,
**caractérisé par le fait**
**que** le champ magnétique est orienté en vis-à-vis des surfaces des capteurs à un angle de 5° à 85°, préférentiellement d'environ 45° à la normale du plan de chaque capteur particulier.

8. Capteur angulaire selon l'une quelconque des revendications 6 à 7,
**caractérisé par le fait**
**que** ledit au moins un aimant est un aimant AlNiCo, fritté ou à base de terres rares.

9. Capteur angulaire selon l'une quelconque des revendications 5 à 8,
**caractérisé par le fait**
**que** l'intensité du champ magnétique non modulée à l'emplacement d'un capteur est de 1 mT à 300 mT, préférentiellement d'environ 15 mT.

10. Capteur angulaire selon l'une quelconque des revendications 5 à 9,
**caractérisé par le fait**
**que** les capteurs sont disposés directement sur ladite au moins une source de champ magnétique.

11. Capteur angulaire selon l'une quelconque des revendications 5 à 10,
**caractérisé par le fait**
**que** la normale de la surface du capteur est orientée de manière parallèle, oblique ou perpendiculaire à l'axe de rotation dudit au moins un modulateur.

12. Capteur angulaire selon l'une quelconque des revendications 5 à 11,
**caractérisé par le fait**
**que** les capteurs sont disposés à une distance par rapport audit au moins un modulateur (9) se trouvant dans un domaine de 100 µm à 5 mm, préférentiellement de 500 µm à 1,5 mm.

13. Capteur angulaire selon l'une quelconque des revendications 5 à 12,
**caractérisé par le fait**
**que** ledit moins un modulateur (9) sur l'axe de l'angle devant être déterminé est constitué d'au moins deux roues dentées ferromagnétiques disposées de manière coaxiale comportant une denture droite et/ou une denture plate.

14. Capteur angulaire selon la revendication 13,
**caractérisé par le fait**
**que** lesdits au moins deux roues dentées comportent un nombre de dents différent, préférentiellement deux à deux une différence d'une dent.

15. Capteur angulaire selon l'une quelconque des revendications 5 à 14,
**caractérisé par le fait**
**que** ledit moins un modulateur (9) est constitué d'un groupe de trois roues dentées coaxiales, les roues dentées comportant 64, 63 et 56 dents.

16. Capteur angulaire selon l'une quelconque des revendications 5 à 15,
**caractérisé par le fait**
**que** ledit au moins un modulateur (9) sur l'axe de l'angle devant être déterminé est constitué d'au moins une rondelle ferromagnétique (9) disposée de manière coaxiale, qui comporte des fentes, des renfoncements ou des saillies radiales.

17. Capteur angulaire selon la revendication 16,
**caractérisé par le fait**
**que** ledit au moins une rondelle ferromagnétique (9) disposée de manière coaxiale comporte au moins deux bagues concentriques (12, 13, 14) disposées de manière coaxiale constituées de fentes, de renfoncements ou de saillies disposés de manière équidistante.

18. Capteur angulaire selon la revendication 17,
**caractérisé par le fait**
**que** ladite au moins une rondelle ferromagnétique (9) disposée de manière coaxiale comporte trois bagues concentriques (12, 13, 14) disposées de manière coaxiale constituées de fentes disposées de manière équidistante, les bagues comportant 64, 63 et 56 fentes.
